# EUROPÄISCHE PATENTANMELDUNG

(11) **EP 3 081 066 A1**
(43) Veröffentlichungstag der Anmeldung: **19.10.2016**
(21) Anmeldenummer: 16000852.0
(22) Anmeldetag: 15.04.2016
(51) Int. Cl.: A01C 15/00, A01B 63/16, E01C 19/20

(54) **STREUGERÄT**

(30) Priorität: 15.04.2015 AT 932015
(71) Anmelder: HYDRAC Pühringer GmbH&CoKG, 4523 Neuzeug (AT)
(72) Erfinder: Pühringer, Josef, 4523 Neuzeug (AT)
(74) Vertreter: Cunow, Gerda

(57) **Zusammenfassung**

Bei einem Streugerät (1) zum Aufbringen von Streugut auf landwirtschaftliche Flächen und/oder Verkehrsflächen umfassend einen Aufnahmebehälter (2) für Streugut, gegebenenfalls eine in den Aufnahmebehälter (2) integrierte Rührwelle sowie einen mit dem Aufnahmebehälter (2) zusammenwirkenden Streuer zum Ausstreuen des Streuguts aus dem Aufnahmebehälter (2), ist das Streugerät (1) zum gegebenenfalls lösbaren Festlegen an einer Anbauvorrichtung eines das Streugerät (1) transportierenden Fahrzeugs ausgebildet, wobei wenigstens ein Nachlaufrad (3) an dem Aufnahmebehälter (2) für Streugut, insbesondere an einer an dem Aufnahmebehälter (2) für Streugut angelenkten Konsole (4) angeordnet ist.

## Beschreibung

Die vorliegende Erfindung bezieht sich auf ein Streugerät zum Aufbringen von Streugut auf landwirtschaftliche Flächen und/oder Verkehrsflächen umfassend einen Aufnahmebehälter für Streugut, gegebenenfalls eine in den Aufnahmebehälter integrierte Rührwelle sowie einen mit dem Aufnahmebehälter zusammenwirkenden Streuer zum Ausstreuen des Streuguts aus dem Aufnahmebehälter, wobei das Streugerät zum gegebenenfalls lösbaren Festlegen an einer Anbauvorrichtung eines das Streugerät transportierenden Fahrzeugs ausgebildet ist.

Streugeräte sowohl für die Landwirtschaft als auch zum Einsatz im Straßendienst sind seit einer Mehrzahl von Jahren bekannt und sind entweder unlösbar an entsprechenden Fahrzeugen angebracht oder aber in der Mehrzahl von Fällen lösbar an Fahrzeugen, wie Traktoren, Lastkraftwagen oder aber auch geländegängigen Autos und dgl. festlegbare Zusatzeinrichtungen. Mit derartigen Streugeräten, wie z.B. Tellerstreuern oder Walzenstreuern kann festes Streugut, wie beispielsweise Split, Salz oder im Bedarfsfall auch Dünger ausgebracht werden, ohne dass das voluminöse und schwere Zusatzgerät, insbesondere der Aufnahmebehälter, in welchem das Streugut aufgenommen wird, permanent an dem entsprechenden Fahrzeug angelenkt sein muss. Nachteilig an derartigen Einrichtungen ist jedoch die Tatsache, dass derartige Aufnahmebehälter für Streugut, insbesondere in ihrem befüllten Zustand, ein nicht unbeträchtliches Gewicht aufweisen, wodurch die Fahreigenschaften des das Streugerät tragenden Fahrzeugs massiv beeinflusst werden. Insbesondere wird durch die geänderte Gewichtsverteilung an dem das Streugerät tragenden Fahrzeug die Achslast an derjenigen Achse des Transportfahrzeugs, welche dem Streugerät beabstandet bzw. entfernt angeordnet ist, entlastet, so dass im Falle beispielsweise eines für den Heckanbau an verschiedensten Schleppern geeigneten Streugeräts die Vorderachslast des Transportfahrzeugs verringert wird, was einerseits die Sicherheit des Einsatzes nicht gewährleistet und andererseits auch beispielsweise die Spurtreue des Fahrzeugs nachteilig beeinflusst. Um derartige nachteilige Einflüsse auf die Achslast bei derartigen Streugeräten hintanzuhalten, wurden beispielsweise Zusatzgewichte an derjenigen Achse angebracht, welche durch das Gewicht des Streugeräts entlastet wurde, so dass das Fahrzeug insgesamt ein höheres Gewicht aufwies, jedoch die Nachteile durch das angebaute Streugerät vermieden wurden.

Weiterhin ist es bei derartigen Ausbildungen möglich, beispielsweise das Streugerät am Heck des Transportfahrzeugs anzubringen und an der Vorderseite im Winterdienst beispielsweise einen Schneepflug anzubringen, in welchem Fall die Achslast ausgeglichen ist. Da jedoch insbesondere im landwirtschaftlichen Betrieb, jedoch auch in vielen Fällen im Winterdienst es nicht unbedingt erforderlich ist, einen Schneepflug oder ein weiteres Gerät an der vorderen Achse des Transportfahrzeugs anzubringen, besteht ein Bedarf nach einem Streugerät, welches so ausgebildet ist, dass es die Achslast auf beide bzw. sämtliche Achsen des Transportfahrzeugs nicht nachteilig beeinflusst.

Aus der AT 4184 U1 ist beispielsweise ein Tellerstreuer für das Ausbringen von Streugut auf Verkehrsflächen bekannt geworden, bei welchem der Streuteller an verschiedenen Positionen in Bezug auf den Aufnahmebehälter angeordnet sein kann, wie beispielsweise hinter dem Aufnahmebehälter oder seitlich neben diesem. Durch eine derartige Anordnung wird jedoch einerseits das Gewicht des Streugeräts weiter nachteilig beeinflusst, und zwar entweder durch das einseitige Anbringen des Streutellers oder aber die Achslast der dem Streugerät abgewandten Achse des Streubehälters wird weiter verringert.

Der DE 20 2009 000 022 U1 ist ein Anbaugerät für landwirtschaftliche Fahrzeuge zu entnehmen, bei welchem an einer von einer für die Anlenkung an das landwirtschaftliche Gerät, an welchem das Anbaugerät festgelegt ist, abgewandten Seite des landwirtschaftlichen Geräts ein freilaufendes Rad zur Unterstützung des Geräts angeordnet ist.

Der WO 2009/015445 A1 ist ein landwirtschaftliches Anbaugerät zu entnehmen, welches in der Anlage ist, eine Mehrzahl von Tätigkeiten gleichzeitig auszuführen, wie beispielsweise das Graben von Furchen und Einlegen von entsprechendem Saatgut in die gebildeten Furchen.

Bei einem derartigen landwirtschaftlichen Gerät ist zwischen einem dafür vorgesehenen Zugfahrzeug und dem Gerät wenigstens ein unterstützendes Rad vorgesehen.

Weiterhin ist es auch bekannt, nicht nur bei Streugeräten sondern auch bei einer Vielzahl von anderen Anhängern bzw. Anbaugeräten Stützräder bzw. Stützelemente vorzusehen, welche für das Abstellen des jeweiligen Geräts während der Nichtbenutzung gedacht sind.

Derartige Stützräder sind jedoch lediglich dafür da, ein Umkippen des Streugeräts im Ruhezustand, wenn es nicht an das Zugfahrzeug angelenkt ist, zu verhindern und haben eine auf ein dem Streugerät entfernt angeordnete Achse des Zugsfahrzugs nivellierende bzw. ausgleichende Wirkung nicht.

Schließlich ist der DE-AS 1 025 188 ein Mineraldüngerstreuer entnehmbar, welcher entweder vor oder hinter einem Zugfahrzeug angelenkt werden kann und welcher im Einsatz mit einem Stützrad in der Waagrechten gehalten wird. Nachteilig an einer derartigen Konstruktion ist die großbauende Anordnung, bei welcher das Stützrad an der dem Zugfahrzeug abgewandten Seite des Streuers angeordnet ist, so dass der Streuer im Prinzip zwischen dem Zugfahrzeug und dem Stützrad in der Waagrechten bzw. in Position gehalten wird.

Die Erfindung zielt nun ausgehend von einem bekannten Tellerstreuer darauf ab, ein Streugerät zur Verfügung zu stellen, welches einerseits eine gleichmäßige Achslast auf sämtliche Achsen des Zugfahrzeugs, an welchem das Streugerät angelenkt ist, zur Verfügung stellt und andererseits ausreichend kleinbauend ist, um nicht die Außenabmessungen des Streugeräts als solches zu vergrößern, insbesondere die Gesamtlänge der Kombination aus Streugerät und Fahrzeugs nicht weiter zu verlängern.

Zur Lösung dieser Aufgabe ist das erfindungsgemäße Streugerät im Wesentlichen dadurch gekennzeichnet, dass wenigstens ein Nachlaufrad an einer an dem Aufnahmebehälter für Streugut angelenkten Konsole angeordnet ist und das wenigstens eine Nachlaufrad an der dem transportierenden Fahrzeug zugewandten Seite des Aufnahmebehälters angeordnet ist. Indem an einer Konsole des Aufnahmebehälters für Streugut wenigstens ein Nachlaufrad vorgesehen ist, gelingt es, im Wesentlichen das Gewicht des Aufnahmebehälters in sowohl leerem als auch gefülltem Zustand durch das Nachlaufrad aufzunehmen, wodurch einerseits eine Vergleichmäßigung der Achslasten des den Streugutbehälter tragenden Fahrzeugs erreicht wird und das Zugfahrzeug entlastet wird. Indem durch das Nachlaufrad ein Teil des Gewichts des Streugeräts bzw. des Aufnahmebehälters des Streugeräts aufgenommen wird, wird zusätzlich aufgrund der höheren Achslast auf der Achse des Zugfahrzeugs, welche dem Streugerät abgewandt wird, eine größere Spurtreue und Traktion erreicht und insbesondere bei einem am Heck eines Fahrzeugs angebrachtem Steuergerät wird es dadurch ermöglicht, dass an der Frontseite ein zusätzlicher Ballast nicht angebracht werden muss, so dass beispielsweise im Winterdienst das Fahrzeug ohne zusätzlich an der Vorderseite angebrachtem Schneepflug fahren kann, wodurch einerseits die Gesamtlänge des Fahrzeugs verringert wird und andererseits das Fahrzeug wendiger wird und auch unübersichtliche Bereiche besser eingesehen werden können, da der die Sicht beeinträchtigende Schneepflug nicht vorhanden ist und schließlich auch die Treibstoffkosten des Gesamtsystems herabgesetzt werden können.

Indem weiter das Nachlaufrad wenigstens teilweise unter dem beispielsweise trichterförmigen oder wannenförmigen Aufnahmebehälter angeordnet ist, gelingt es, die Gesamtbaulänge des Fahrzeugs samt Streugerät nicht zu erhöhen, wodurch kleinbauende Geräte zur Verfügung gestellt werden können, die gegenüber dem Stand der Technik den Vorteil aufweisen, dass nicht nur die Gesamtbaulänge des Fahrzeugs samt Streugerät nicht verlängert wird, sondern, wie bereits ausgeführt, die Achslasten des den Streubehälter tragenden Fahrzeugs vergleichmäßigt werden können.

Dadurch dass das wenigstens eine Nachlaufrad an der dem transportierenden Fahrzeug zugewandten Seite des Aufnahmebehälters angeordnet ist, wird die Gesamtlänge des Fahrzeugs samt dem angebauten Streugerät in keiner Weise verlängert, so dass während einer Benutzung der Fahrer nicht auf eine vergrößerte Gesamtlänge seines Einsatzfahrzeugs achten muss, sondern nur die Außenabmessungen des Streugeräts im Auge behalten muss. Daher wird mit einem derartigen Streugerät sichergestellt, dass das Nachlaufrad im Wesentlichen unter dem Streugerät angeordnet ist, so dass es einerseits einen großen Teil der Last des im Wesentlichen senkrecht über dem Nachlaufrad angeordneten Streugeräts aufnimmt, so dass die Verteilung der Achslasten des das Streugerät transportierenden Fahrzeugs im Wesentlichen durch das Streugerät unbeeinflusst bleibt.

Um auch große Lasten der Streugeräte sicher und zuverlässig aufnehmen zu können, ist die Erfindung dahingehend weitergebildet, dass zwei symmetrisch zu einer Mittelebene des Aufnahmebehälters angeordnete Nachlaufräder vorgesehen sind. Durch eine derartige Anordnung gelingt es, insbesondere große Aufnahmebehälter für kommunale Streufahrzeuge sicher und zuverlässig abzustützen. Derartige große Aufnahmebehälter, wie sie beispielsweise für Streu- und Räumfahrzeuge, welche auf Autobahnen zum Einsatz gelangen, vorgesehen sind, haben teilweise eine Gesamtbreite von bis zu 4 m und nehmen einige Kubikmeter Splitt oder Streusalz auf, wodurch das Streugerät ein nicht unbeträchtliches Gewicht aufweist. Um ein derartiges Gewicht so weit als möglich abzustützen, werden zwei Nachlaufräder vorgesehen. Es erübrigt sich in diesem Zusammenhang festzuhalten, dass beispielsweise auch drei Nachlaufräder für extrem großbauende Geräte angeordnet werden können.

Indem, wie dies einer Weiterbildung der Erfindung entspricht, das Nachlaufrad auf der landwirtschaftlichen Fläche und/oder Verkehrsfläche durch eine Druckfeder oder einen Zylinder mit Druckspeicher in Anlage gehalten ist, wodurch eine sichere Anpassung an die unterschiedlichsten Fahrbahnkonturen bzw. Oberflächenbeschaffenheiten gewährleistet ist. Als Zylinder ist hierbei ein Pneumatik- oder Hydraulikzylinder zu verstehen. Indem die Erfindung dahingehend weitergebildet ist, dass jedes Nachlaufrad an einer gesonderten Konsole des Aufnahmebehälters mittels jeweils wenigstens einem drehbar gelagerten Parallellenker, vorzugsweise zwei drehbar gelagerten Parallellenkern angeordnet ist, wird die Laufruhe des Streugeräts weiter erhöht. Mit einer derartigen Ausbildung gelingt es, den durch das Nachlaufrad abgestützten Aufnahmebehälter des Streugeräts an die unterschiedlichsten Bodenkonturen anzupassen und eine sichere Führung und Unterstützung desselben zu gewährleisten.

Indem, wie dieser einer Weiterbildung der Erfindung entspricht, jedes Nachlaufrad mit einer Verstellspindel versehen ist, kann das Streugerät gleichzeitig an die unterschiedlichsten Zugfahrzeuge und unterschiedlichsten Anbauhöhen desselben angepasst werden. Durch die Verstellspindel gelingt es, das Nachlaufrad mehr anzuheben bzw. weiter abzusenken und so an die verschiedensten Bauhöhen des Zugfahrzeugs bzw. des das Streugerät transportierenden Fahrzeugs anzupassen.

Insbesondere wenn ein derartiges Streugerät an der Rückseite von Kommunalfahrzeugen, welche für den Winterdienst eingesetzt sind, angelenkt wird, ist es offensichtlich, dass hier die unterschiedlichsten Fahrzeugtypen von einem herkömmlichen Geländefahrzeug bis zu einem Groß-LKW zum Einsatz gelangen, und beispielsweise ein und dasselbe Streugerät auf verschieden dimensionierten Zugfahrzeugen angebaut werden muss. Um derartigen Anforderungen zu genügen, ist es erforderlich, die Höhe des Nachlaufrads, insbesondere den Abstand zwischen Nachlaufrad und Unterkante des Aufnahmebehälters einstellen zu können, wofür die Verstellspindel vorgesehen ist.

Bevorzugt wird hierbei, wie dies einer Weiterbildung der Erfindung entspricht, eine Position des Nachlaufrads mit der mit einer arretierbaren Handkurbel einstellbaren Verstellspindel festgelegt. Mit Rücksicht auf die Tatsache, dass die Einstellung und insbesondere die Anpassung an die verschiedenen Topographien häufig nur ganz geringe Veränderungen der Lage des Nachlaufrads erfordern, hat sich herausgestellt, dass der Einsatz einer arretierbaren Handkurbel als Einstellmöglichkeit für die Verstellspindel bevorzugt ist, da hier geringe Veränderungen der Einstellungen des Nachlaufrads vorgenommen werden können.

Für eine individuelle Anpassung des Anpressdrucks auf die Straße bzw. eine individuelle Anpassung des aufzunehmenden Gewichts ist die Erfindung dahingehend weitergebildet, dass jedes Nachlaufrad mit zwei beidseitig der Verstellspindel angeordneten, geneigt angeordneten Druckfedern oder Zylindern mit Druckspeicher federbelastet ist. Durch die geneigt angeordneten Druckfedern, welche beidseitig der Verstellspindel angeordnet sind, kann der Anpressdruck des Nachlaufrads auf die Straße individuell angepasst werden, so dass das Nachlaufrad der Streugeräte für unterschiedlichste Dimensionierungen eingesetzt werden kann. Durch geeignete Vorspannung der Druckfedern wird insbesondere während des Fahrens auf unebenem Gelände eine entsprechende Laufruhe des Nachlaufrads und somit eine möglichst geringe Vibration des Streugeräts zur Verfügung gestellt.

Die optimale Neigung der Druckfedern, mit welchen einerseits eine ausreichende Aufnahme der auf das Nachlaufrad wirkenden Kräfte bewerkstelligt wird, und gleichzeitig eine ausreichende Federung des Streugeräts zur Verfügung gestellt wird, wird dadurch erreicht, dass ein oberes freies Ende der Druckfedern oder Zylindern mit Druckspeicher zu der Konsole gerichtet ist und mit einer Senkrechten einen Winkel zwischen 10 und 30°, insbesondere etwa 15° einschließt. Bei stärker geneigten Druckfedern wird sowohl die Kraftaufnahme als auch die erforderliche Federung verschlechtert, so dass insgesamt der Winkel zwischen der Senkrechten und einem oberen freien Ende der Druckfedern, welches zur Konsole gerichtet ist, möglichst klein gehalten werden soll.

Indem, wie dies einer Weiterbildung der Erfindung entspricht, das Streugerät so weitergebildet ist, dass die Vorspannung der Druckfedern einstellbar, insbesondere mittels eines an an dem Aufnahmebehälter angeordneten Lochschienen verstellbar angeordneten Lagerbocks, einstellbar ist, sind sowohl Anpressdruck als auch Federung des Streugeräts einstellbar, wodurch sowohl das aufzunehmende Gewicht am Nachlaufrad als auch der notwendige Anpressdruck und das Federverhalten des Streugeräts beeinflussbar sind.

Um das Streugerät in einem vom Fahrzeug entkoppelten Zustand sicher und zuverlässig abstellen zu können, ist die Erfindung dahingehend weitergebildet, dass an dem Aufnahmebehälter weiterhin wenigstens ein in wenigstens einer Arbeits- und einer Ruheposition festlegbares herkömmliches Stützelement vorgesehen ist. Derartige Stützelemente sind aus dem Stand der Technik bekannt und ermöglichen es, insbesondere bei Vorsehen von zwei Stützelementen, gemeinsam mit dem Nachlaufrad eine Dreipunktabstützung des Streugeräts zur Verfügung zu stellen, so dass dieses auch in von einem Streugerät transportierendem Fahrzeug im entkoppelten Zustand sicher und zuverlässig gelagert werden kann, ohne dass ein Umkippen des Streugeräts befürchtet werden muss.

Die Erfindung wird nachfolgend anhand von in der Zeichnung dargestellten Ausführungsbeispielen näher erläutert. In dieser zeigen:
Fig. 1 eine Seitenansicht eines erfindungsgemäßen Streugeräts samt Nachlaufrad,
Fig. 2 das Streugerät von Fig. 1 in der Draufsicht auf das Nachlaufrad,
Fig. 3 eine analoge Ansicht wie Fig. 2, jedoch auf ein Streugerät mit zwei Nachlaufrädern, und
Fig. 4 eine teilweise perspektivische Ansicht des Nachlaufrads samt Aufhängungsvorrichtung.

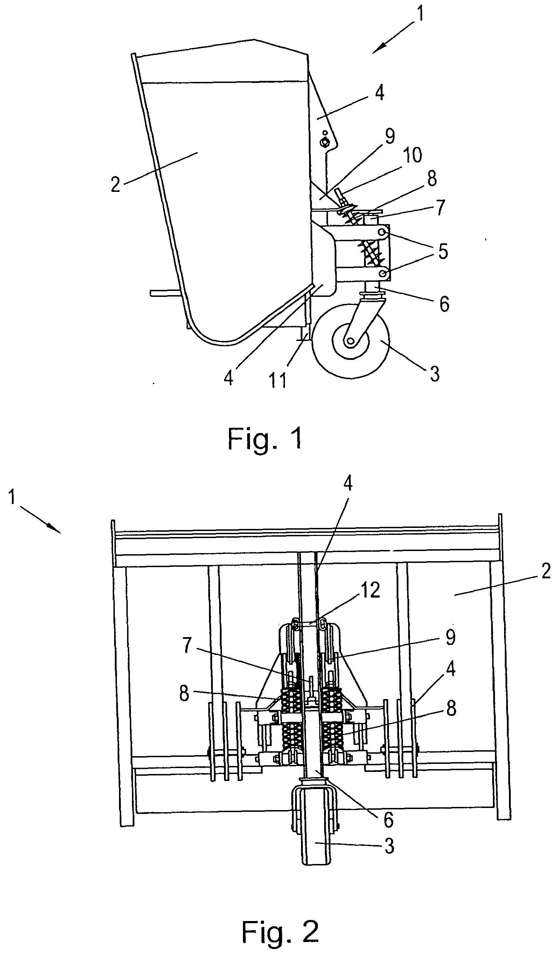

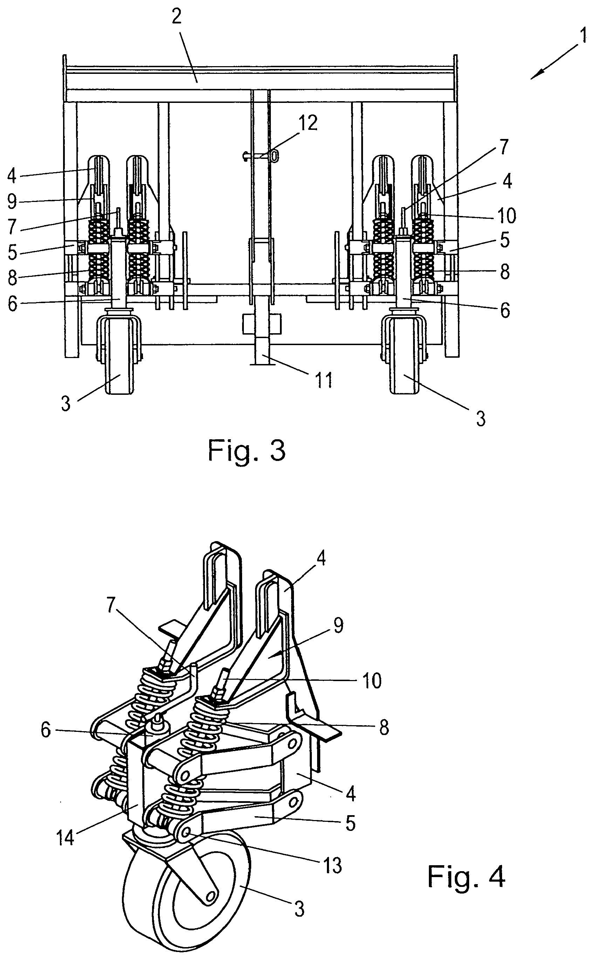

In Fig. 1 ist ein Streugerät allgemein mit 1 bezeichnet, welches einen Aufnahmebehälter 2 für Streugut aufweist. Der Aufnahmebehälter 2 für Streugut weist in seinem Inneren eine in den Figuren nicht dargestellte Rührwelle auf, ebenso wie einen ebenfalls nicht dargestellten Streuer zum Ausstreuen des Streuguts aus dem Streubehälter 2. Das Streugerät 1 ist hierbei zur lösbaren Festlegung an einem das Streugerät 1 transportierenden Fahrzeug ausgebildet, wobei die Festlegung des Streugeräts 1 ebenso wie die Festlegung des schematisch mit 3 bezeichneten Nachlaufrads an einer Konsole 4 des Streugeräts festgelegt ist. An der Konsole 4 wird das Nachlaufrad 3 mittels zweier drehbar gelagerter Parallellenker 5 gelagert, wodurch eine Anpassung des Nachlaufrads 3 an jede Fahrbahnkontur möglich wird. An den Parallellenkern 5 ist, wie dies in Fig. 4 besser ersichtlich ist, das Nachlaufrad 3 über eine Stützwinde 6 angelenkt. Mit der Stützwinde 6 kann das Nachlaufrad 3 an jede unterschiedliche Anbauhöhe des nicht dargestellten Zugfahrzeugs angepasst werden. Die Anpassung erfolgt hierbei durch Verlängern bzw. Verkürzen des herausragenden Teils der Stützwinde 6 über drehbare Betätigung der Handkurbel 7. Damit das Nachlaufrad 3 mit dem notwendigen Anpressdruck auf der Straße geführt werden kann, ist es über zwei flexible Druckfedern 8 vorgespannt. Die Druckfedern 8 sind hierbei an ihrem unteren Ende mit dem Parallellenker 5 verbunden und das obere Ende der Druckfedern 8 ist jeweils in entsprechenden Aufnahmeschienen, welche an dem Aufnahmebehälter 2 angeordnet sind, mittels einem Lagerbock 9 längenverstellbar angeordnet. Der Lagerbock 9, welcher hierbei im Wesentlichen dreieckförmig ausgebildet ist, ist an seinem einen freien Ende mit einem Auge ausgebildet, welches an dem freien Ende der Federführung 10 lösbar festgelegt ist. Mittels einer derartigen Ausbildung kann die Vorspannung der Druckfeder 8 in gewissen Grenzen frei gewählt werden und somit einerseits der Anpressdruck auf die Straße und andererseits das am Nachlaufrad 3 aufzunehmende Gewicht individuell angepasst werden. Mit einer derartigen Einstellmöglichkeit ist es somit möglich, beispielsweise das durch das Nachlaufrad 3 aufzunehmende Gewicht des Streugeräts 1 einzustellen, welches sich beispielsweise über den Füllgrad bzw. das in dem Aufnahmebehälter 2 aufgenommene zu streuende Material verändern kann.

In Fig. 2, in welcher die Bezugszeichen von Fig. 1 beibehalten sind, ist das Streugerät 1 von Fig. 1 derart dargestellt, dass das Nachlaufrad 3 in der Draufsicht dargestellt ist, d.h. aus einer Richtung, welche die zu einem transportierenden Fahrzeug gerichtete Seite des Streugeräts 1 zeigt.

In Fig. 2 ebenso wie in Fig. 1 sind weiterhin Teile eines in einer Arbeits- und Ruheposition festlegbaren Stützelements 11 dargestellt. In Fig. 1 ist hierbei das in Richtung zu einer Straße bzw. einem Untergrund gerichtete freie Ende des Stützelements 11 sichtbar, wohingegen in Fig. 2 das obere Ende desselben, welches mit beispielsweise einer durch eine Ausnehmung bzw. ein Loch geführte Stange 12 und einem Splint an der Konsole 4 des Aufnahmebehälters 2 gesichert ist, gezeigt ist.

Schließlich ist in Fig. 2 deutlich die Festlegung des Nachlaufrads 3 an der Konsole 4 des Aufnahmebehälters 2 erkenntlich, wobei insbesondere die Festlegung an dem an der Rückwand des Streugeräts 1 ausgebildeten Teil der Konsole 4 in Fig. 1 nicht erkennbar war. An die Konsole 4 sind hierbei sowohl die Parallellenker 5 als auch der Lagerbock 9, mit welchem die Federführung 10 der Druckfedern 8 gehalten ist, festgelegt. Durch eine derartige Konstruktion gelingt es, eine federnde Führung des Nachlaufrads 3 zu erzielen, so dass eine Anpassung an sämtliche verschiedene Arten des Untergrunds problemlos möglich erscheint. Der notwendige Anpressdruck wird hierbei über die Druckfedern 8 aufgebracht. Die Höhenverstellung des Nachlaufrads 3 erfolgt durch Betätigen der Handkurbel 7 und dient zur Anpassung an verschiedene Transportfahrzeuge. Die Parallellenker 5 sind, wie dies ebenfalls in Fig. 2 ersichtlich ist, über die Stützwinde 6 mit dem Nachlaufrad 3 verbunden, so dass wiederum das Nachlaufrad 3 an jede Bauhöhe des Zugfahrzeugs angepasst werden kann.

Bei der Darstellung in Fig. 3 sind sämtliche Bezugszeichen von Fig. 2 beibehalten, wobei in Fig. 3 lediglich eine Verdoppelung der Festlegung der Stützräder stattgefunden hat. Einziger Unterschied zwischen Fig. 3 und Fig. 2 ist, dass das zusätzliche Stützelement 11 in dieser Darstellung in der Mitte des Aufnahmebehälters 2 angeordnet ist und sehr leicht erreichbar und somit manuell verstellbar ist.

Bei der Darstellung von Fig. 4, in welcher lediglich eine teilweise in der Perspektive gezeigte Darstellung des Nachlaufrads 3 sowie seiner Anlenkung an der Konsole 4 des nicht dargestellten Aufnahmebehälters 2 des Streugeräts 1 gezeigt ist, sind ebenfalls die Bezugszeichen von Fig. 1 beibehalten.

In dieser Darstellung ist insbesondere die Festlegung der Parallellenker 5 an der Konsole 4 erkennbar und insbesondere ist ersichtlich, dass die Parallellenker 5 drehbar an der Konsole angelenkt sind. Durch eine derartige drehbare Anlenkung der zwei Parallellenker 5 an der Konsole 4 ist eine Anpassung an jede Fahrbahnkontur möglich und zwar unabhängig davon, ob es sich um asphaltierte Straßen oder nicht asphaltierte Feldwege handelt. An der dem Nachlaufrad 3 zugewandten Drehachse 13 ist weiterhin die Federführung 10 für die Druckfedern 8 angelenkt. Die Achse 13 ist hierbei durch das mittenliegende Versteifungsteil 14 geführt, welches die Führung für die Stützwinde 6, von welcher in dieser Figur lediglich die Handkurbel 7 gut ersichtlich ist, umgibt. Durch dieses Zusammenwirken gelingt es mit einer relativ einfachen Konstruktion des Nachlaufrads 3, dieses sowohl an die unterschiedlichsten Fahrbahnkonturen anzupassen ebenso wie den Anpressdruck des Rads 3 auf die Straße einzustellen, sowie mit Hilfe der Stützwinde 6 die Anbauhöhe an die unterschiedlichsten Fahrzeugtypen anzupassen. Schließlich gelingt es mit der Einstellbarkeit der Druckfeder 8, die Vorspannung derselben zu regulieren, wodurch eine weitere Anpassung an die Fahrbahngegebenheiten sowie eine weitere Änderung des Anpressdrucks möglich wird. Diese Einstellung erfolgt die verschiebliche Festlegung des Lagerbocks 9 an der Konsole 4, wodurch die Feder 8 mehr oder weniger vorgespannt wird.

Mit einem derartigen erfindungsgemäßen Streugerät 1, welches mit Hilfe eines Nachlaufrads 3 abgestützt bzw. auf dem Untergrund geführt ist, gelingt es, eine extrem kurzbauende Variante des Streugeräts 1 zur Verfügung zu stellen und überdies sicherzustellen, dass auf die Achsen des Zugfahrzeugs ein gleichmäßiger Achsdruck wirkt. Wenn das Streugerät 1 an dem Heck eines Zugfahrzeugs angelenkt ist, wird bei herkömmlichen Varianten des Streugeräts 1 aufgrund Lösung wird sowohl die Spurtreue erhöht als auch die Traktion aufgrund der gestiegenen Vorderachslast deutlich verbessert und dies ohne Anbringen eines zusätzlichen Ballastgewichts an der Frontseite des das Streugerät 1 transportierenden Fahrzeugs. Insgesamt wird somit die Fahrsicherheit deutlich erhöht, ohne dass die Gesamtlänge des Fahrzeugs erhöht wird, wodurch weiterhin das Fahrzeug wendiger wird und auch die Treibstoffkosten gegenüber herkömmlichen Fahrzeugen, welche eine zusätzliche Vorderachslast benötigen, deutlich herabgesetzt wird.

## Patentansprüche

1. Streugerät (1) zum Aufbringen von Streugut auf landwirtschaftliche Flächen und/oder Verkehrsflächen umfassend einen im Aufnahmebehälter (2) für Streugut, gegebenenfalls eine in den Aufnahmebehälter (2) integrierte Rührwelle sowie einen mit dem Aufnahmebehälter (2) zusammenwirkenden Streuer zum Ausstreuen des Streuguts aus dem Aufnahmebehälter (2), wobei das Streugerät (1) zum gegebenenfalls lösbaren Festlegen an einer Anbauvorrichtung eines das Streugerät (1) transportierenden Fahrzeugs, ausgebildet ist, **dadurch gekennzeichnet, dass** wenigstens ein Nachlaufrad (3) an einer an dem Aufnahmebehälter (2) für Streugut angelenkten Konsole (4) angeordnet ist, und dass das wenigstens eine Nachlaufrad (3) an der dem transportierenden Fahrzeug zugewandten Seite des Aufnahmebehälters (2) angeordnet ist.

2. Streugerät (1) nach Anspruch 1, **dadurch gekennzeichnet, dass** zwei symmetrisch zu einer Mittelebene des Aufnahmebehälters (2) angeordnete Nachlaufräder (3) vorgesehen sind.

3. Streugerät (1) nach Anspruch 1 oder 2, **dadurch gekennzeichnet, dass** das Nachlaufrad (3) auf der landwirtschaftlichen Fläche und/oder Verkehrsfläche durch eine Druckfeder oder einen Zylinder mit Druckspeicher in Anlage gehalten ist.

4. Streugerät (1) nach einem der Ansprüche 1 bis 3, **dadurch gekennzeichnet, dass** jedes Nachlaufrad (3) an einer gesonderten Konsole (4) das Aufnahmebehälters (2) mittels jeweils wenigstens einem drehbar gelagerten Parallellenker (5), vorzugsweise zwei drehbar gelagerten Parallellenkern (5) angeordnet ist.

5. Streugerät (1) nach einem der Ansprüche 1 bis 4, **dadurch gekennzeichnet, dass** jedes Nachlaufrad (3) mit einer Verstellspindel versehen ist.

6. Streugerät (1) nach Anspruch 5, **dadurch gekennzeichnet, dass** eine Position des Nachlaufrades (3) mit der mit einer arretierbaren Handkurbel (7) einstellbaren Verstellspindel festlegbar ist.

7. Streugerät (1) nach einem der Ansprüche 1 bis 6, **dadurch gekennzeichnet, dass** jedes Nachlaufrad (3) mit zwei beidseitig der Verstellspindel angeordneten, geneigt angeordneten Druckfedern (8) oder Zylindern mit Druckspeicher zu der Konsole (4) federbelastet ist.

8. Streugerät (1) nach Anspruch 5, **dadurch gekennzeichnet, dass** ein oberes freies Ende der Druckfedern (8) zu der Konsole (4) gerichtet ist und mit einer Senkrechten einen Winkel zwischen 10 und 30°, insbesondere etwa 15° einschließt.

9. Streugerät (1) nach einem der Ansprüche 7 oder 8, **dadurch gekennzeichnet, dass** die Vorspannung der Druckfedern (8) einstellbar, insbesondere mittels eines an dem Aufnahmebehälter (2) angeordneten Lochschienen verstellbar angeordneten Lagerbocks (9), einstellbar ist.

10. Streugerät (1) nach einem der Ansprüche 1 bis 9, **dadurch gekennzeichnet, dass** an dem Aufnahmebehälter (2) weiterhin wenigstens ein in wenigstens einer Arbeits- und einer Ruheposition festlegbares Stützelement (11) vorgesehen ist.
